(19) Europäisches Patentamt / European Patent Office / Office européen des brevets

(11) **EP 4 163 830 A1**

(12) **EUROPEAN PATENT APPLICATION**

(43) Date of publication:
**12.04.2023 Bulletin 2023/15**

(21) Application number: **21306407.4**

(22) Date of filing: **06.10.2021**

(51) International Patent Classification (IPC):
**G06N 3/04** *(2006.01)*     **G06N 3/08** *(2006.01)*
**G06V 40/00** *(2022.01)*

(52) Cooperative Patent Classification (CPC):
**G06N 3/088; G06N 3/044; G06N 3/045;
G06V 40/15; G06V 40/70;** G06F 2203/011;
G06N 3/082

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Commissariat à l'Energie Atomique et
aux Energies
Alternatives
75015 Paris (FR)**

(72) Inventors:
• **HAMIEH, Salam
38054 GRENOBLE (FR)**
• **HEIRIES, Vincent
38054 GRENOBLE (FR)**
• **GODIN, Christelle
38054 GRENOBLE (FR)**
• **AL OSMAN, Hussein
OTTAWA, K2K2G5 (CA)**

(74) Representative: **Cabinet Nony
11 rue Saint-Georges
75009 Paris (FR)**

(54) **MULTI-MODAL PREDICTION SYSTEM**

(57)     The invention relates to a multi-modal prediction system (1) for the machine generation of a time-dependent prediction ($\tilde{Y}$) from multi-sensing temporal signals (S) from which a least two unimodal feature sets have been extracted, the system comprising:
- for each feature set, a unimodal processing unit for processing the feature set through at least one recurrent neural network (RNN), the unimodal processing unit comprising:
∘ an auto-encoder computing a temporal reconstruction error of that feature set, and,
∘ at least one unimodal predictor generating a unimodal temporal prediction,

- a fusion module for fusing the unimodal predictions of the feature sets and generating a temporal prediction, the fusion module comprising a RNN taking as inputs said unimodal predictions together with the reconstruction errors of the feature sets.

[Fig 1]

**FIG.1**

EP 4 163 830 A1

**Description**

**Field of the invention**

The present invention relates to the field of artificial intelligence. In particular, it relates to systems and methods for generating time-dependent predictions, and more particularly multi-modal systems using recurrent neural networks for generating these predictions. In some instances, the present disclosure relates to the field of affective computing and systems for automatic human emotion recognition.

**Background of the invention**

Given the modernization of the world and the integration of computers in our daily life, the need for automatic behavior recognition is increasingly gaining importance.

The field of affective computing is concerned with the design of computer systems capable of analyzing, recognizing, and simulating human emotions. Affective computing approaches are proving to be valuable for educational systems, social robots, healthcare applications, and many other technologies that involve Human-Computer Interaction (HCI) capacities.

One approach to emotional modeling, called the "dimensional approach", consists in characterizing an emotion by its coordinates in the Euclidean space. In particular, it is known to describe an emotion using three dimensions: valence, which represents the positivity of the emotion, arousal, which represents its intensity, and dominance.

In general, emotions are manifested through different signals, such as facial expressions, speech, and physiological indicators such as electrocardiography, blood-pressure volume, etc. Humans usually recognize emotions by rapidly analyzing these multi-sensing temporal signals. There is a need for a computer-based system capable of doing the same, that is, automatically processing these signals for continuous emotion prediction.

It is known to use a system integrating multiple modalities, such as features extracted from audio and video signals, to generate a multi-modal prediction of the emotion. However, these systems sometimes lack in their ability to capture temporal dependencies, which is crucial for continuous emotion prediction tasks.

In the paper from Zhang et al. "Dynamic Difficulty Awareness Training for Continuous Emotion Prediction". (IEEE Trans. Multimed., May 2019), a multi-modal system comprising auto-encoders is disclosed. For each modality, an auto-encoder computes a reconstruction error of the inputs, which is used as a difficulty indicator to improve the unimodal prediction. The unimodal predictions are then combined using a linear regression model.

There remains a need in the art for improved computerized systems which can generate time-dependent predictions, in particular systems that can utilize diverse modes of input to automatically predict a sequential variable such as human emotion, with a relatively good accuracy.

**Summary**

The present invention aims to remedy to all or part of the deficiencies of the prior art mentioned above and embodiments of the invention relate to a multimodal prediction system for the machine generation of a time-dependent prediction from multi-sensing temporal signals from which a least two unimodal feature sets have been extracted, the system comprising:

- for each feature set, a unimodal processing unit for processing the feature set through at least one recurrent neural network (RNN), the unimodal processing unit comprising:

  ∘ an auto-encoder computing a temporal reconstruction error of that feature set, and,
  ∘ at least one unimodal predictor generating a unimodal temporal prediction,

- a fusion module for fusing the unimodal predictions of the feature sets and generating a temporal prediction, the fusion module comprising a RNN taking as inputs said unimodal predictions together with the reconstruction errors of the feature sets.

By "multi-modal", it is meant that the system can integrate multiple modalities, each relating to a different type of input, hereinafter referred as "feature set".

In the following, the terms "temporal", "time-dependent", "continuous" and "sequential" are used interchangeably to designate sequence-based patterns.

The multi-modal system according to the invention provides enhanced prediction of time-dependent variables as compared to separate unimodal systems, because it can process different types of inputs and fuse together the predictions corresponding to each type of input to generate a multi-modal prediction.

The inputs are sequential by nature, and the system according to the invention is able to capture the temporal information of the data by using recurrent neural networks for both the unimodal predictions and the fusion.

A further advantage to the invention is that the learning difficulty of the input data may be accounted for in the prediction, by use of the reconstruction error computed for each feature set by the corresponding auto-encoder.

The reconstruction error can be considered as a "difficulty indicator" of that feature set, that is, as an indicator of the difficulty to drive the learning process of the system. At the fusion level, the reconstruction error can also be considered as a "reliance indicator" of each unimodal feature set.

These indicators are believed to help the system deliver a better prediction performance.

The reconstruction error of each feature set is fed to the RNN of the fusion module, which allows for the temporal information of the reconstruction error to be extracted and improves the fusion of the predictions.

The reconstruction error may also be used at other steps of the prediction process to improve the overall performance of the system.

For instance, in some embodiments, for each feature set, the at least one unimodal predictor uses the reconstruction error computed by the auto-encoder of that feature set as an input for the generation of the unimodal temporal prediction, which enhances the unimodal prediction.

Multi-modal temporal prediction

The multi-modal temporal prediction may be the prediction of an emotion over a period of time, in particular a human emotion, though the system according to the invention is not limited to this application.

The system may be used to monitor a subject's mental or physical state, such as a driver's level of fatigue, or in manufacturing for maintenance management, to predict when maintenance of a piece of equipment should be performed based on its state and aging status.

The multi-modal temporal prediction may comprise more than one variable, in particular at least two different variables.

The multi-modal temporal prediction may present as a matrix with time intervals and the predicted variables as columns and lines, respectively.

For example, for an emotion, the prediction may comprise some of the dimensional representations of that emotion, such as valence, arousing and /or dominance. Emotion may also be defined as a set of discrete classes, such as Ekman's basic emotions (anger, surprise, disgust, fear, enjoyment, and sadness), in which case each class may be a variable predicted by the system.

Multi-sensing signals

The multi-sensing signals may be time-series of various nature, depending on the purpose.

For instance, for human emotion prediction, the multi-signals may be chosen as to best capture the physiological, behavioral, and expressive response of the subject.

The signals may comprise audio and/or video recordings of the subject, in particular its face, over a certain period of time.

The signals may comprise physiological signals of the subject, for instance electrodermal activity (EDA), electrocardiogram (ECG), respiration and/or heart rate (BPM). The signals may comprise tactile or haptic inputs.

In other embodiments like motion prediction, the signals comprise LiDAR, several cameras and GPS data.

Feature sets

The unimodal feature sets extracted from the multi-sensing signals are provided as inputs to the unimodal processing units.

The unimodal feature sets may have been extracted from the multi-sensing signals beforehand through extraction methods known in the art. The unimodal features sets may be extracted from one or multiple types of temporal signals. The unimodal features may be readily available from the art to be used as inputs for the multimodal prediction system of the invention.

As a variant, the multimodal system comprises a feature generator to extract feature sets. In particular, each unimodal processing unit may comprise a feature generator to generate a feature set by processing one or multiple types of signals. In some embodiments, the system comprises a unimodal processing unit for each sensing temporal signal, for processing the signal set through at least one recurrent neural network (RNN).

Preferentially, the feature sets comprise time-series of acoustic, visual and/or textual data.

By way of example, feature sets may comprise visual features representing small changes in the images of video recordings which may correspond to changes in emotion of a subject. Visual features may comprise biological features such as blink occurrence, smiling rate, yawning rate, head movements, or other facial action features of interest.

Feature sets may comprise textual features from audio recordings using automatic speech recognition systems and/or text analysis systems known in the art. The resulting features may represent the words themselves, or a word count or duration.

Acoustic features may relate to the frequency (pitch, jitter), the energy (shimmer, loudness) or spectral information (alpha ratio, Hammarberg index) of a recorded audio. sp.

Auto-encoder

Auto-encoders generally involve neural networks that encode the inputs into a new dimensional state and then reconstruct the input from the encoded values. The reconstruction error can be computed based on the difference between the original input and its reconstruction and used to estimate the difficulty indicator of that feature set.

In particular, the difficulty indicator may be defined as the average mean square of the difference between the input and its reconstruction.

In some embodiments, for each feature, the unimodal processing unit comprises a single RNN performing both as the AE and as the unimodal predictor.

Said RNN may thus generate two outputs: the reconstruction error and the unimodal prediction. The reconstruction error may be fed in return as an input to that same RNN for generating the unimodal prediction.

In other embodiments, for each feature set, the auto-encoder and the at least one unimodal predictor each comprise at least one separate RNN. In that case, the at least two RNNs are preferentially designed with the same architecture.

The unimodal predictor may comprise more than one RNN. In particular, it may comprise as many RNNs as there are variables to be predicted, such as two RNNs in the case of predicting valence and arousal for an emotion.

The use of separate RNNs for the auto-encoder and the unimodal predictor is of particular interest in that case, since the auto-encoder only depends on the feature set and not on the number of variables to be predicted.

Recurrent neural networks

The invention is not limited to a specific type or architecture for the neural networks.

However, some types may be particularly well adapted for processing temporal data.

Preferably, the at least one RNN of the unimodal processing units or/and the RNN of the fusion module is of one of long short-term memory (LSTM) or Gated Recurrent Unit (GRU) type.

In some embodiments, the at least one RNN of the unimodal processing units or/and the RNN of the fusion module is a bi-directional RNN.

A bi-directional RNN allows for the inputs to be processed in both directions, meaning that past and future information can be captured for the prediction.

Hence, the use of bi-directional RNNs effectively improves the context available for the processing, which is particularly advantageous for sequence-based task recognition such as emotion recognition.

Said bi-directional RNN may be a bi-LSTM or a bi-GRU.

In some embodiments, the at least one RNN of the unimodal processing units or/and the RNN of the fusion module may further comprise a feed-forward neural layer.

In particular, it may comprise 4 recurrent layers followed by a feed forward layer.

Method to generate a multi-modal temporal prediction

Another aspect of the present invention relates to a computer-implemented method to generate a multi-modal temporal prediction from multi-sensing signals, from which a least two unimodal feature sets have been or may be extracted, using the system defined above, the method comprising:

   a) process each feature set in a unimodal processing unit through at least one RNN to generate a unimodal temporal prediction and a reconstruction error, the reconstruction error being computed by an auto-encoder and the unimodal prediction by a unimodal predictor,
   b) fuse the unimodal temporal predictions to generate a multi-modal temporal prediction, the fusion being performed by a fusion module comprising a RNN, the reconstruction error of each feature set being provided as an additional input to the fusion module for the fusion.

By computer-implemented, it is meant that the method s performed by an electronic hardware such as a personal computer, server, microcontroller board or similar devices, with the addition if needed of the required HMI and signal processors.

The method may comprise generating from the multi-sensing signals at least two feature sets, preferentially at least three feature sets.

Preferentially, for each feature set, the reconstruction error of that feature set is provided as an additional input to the unimodal predictor to be used for generating the unimodal temporal prediction.

As described above, the method may be used for the prediction of dimensional representations of an emotion, in particular valence and arousing.

At step b), the reconstruction error and the unimodal prediction may be generated through the same RNN, or they may be each computed through a separate RNN, in which case the different RNNs preferentially present the same architecture.

Training

Preferentially, prior to step b) of the method above, the RNNs of the unimodal processing units and fusion module are trained separately with a dataset comprising a training dataset and a validation dataset.

The training may be conducted in three phases: training of the auto-encoders, the training of the unimodal predictors and the training of the fusion module.

The first two phases occur at the unimodal level, that is, they are conducted separately for each feature set.

The training of the auto-encoders consists in finding the parameters that minimize the reconstruction error.

For example, in the case of a basic auto-encoder with one hidden layer, an input example $x \in \mathbb{R}^d$ passes through the hidden layer $h(x) \in \mathbb{R}^p$ where:

$$h(x) = g(W_1 x + b_1)$$

and *g(z)* is a non-linear activation function. Then, the auto-encoder decodes the hidden representation *h(x)* to produce a reconstruction of the input $\tilde{x} \in \mathbb{R}^d$ :

$$\tilde{x} = g(W_2 h(x) + b_2).$$

The training of this AE consists in finding the parameters {$W_1$, $W_2$, $b_1$, $b_2$} that minimizes the Reconstruction Error (RE) which is described by the following loss function:

$$RE = \mathcal{L}(W_1, W_2, b_1, b_2) = \sum_{x \in \mathbb{R}^d} \|x - \tilde{x}\|.$$

For the training of the predictors, a dataset comprising the feature sets and their respective labels, is partitioned into a training set and a validation set.

In each epoch, a chosen optimizer tries to determine the weights of the neural network that minimize the training loss function $\mathcal{L}$ which represents the total error. The optimizer minimizes the loss function on the training set. After each epoch, the set of determined weights is evaluated on the validation set.

Preferentially, for the loss function, a concordance correlation coefficient (CCC) loss is computed for each trained RNN to represent the performance of that RNN on the validation dataset. The CCC may be defined as:

$$\mathcal{L} = 1 - CCC$$

$$CCC = \frac{2\rho \sigma_{\hat{Y}} \sigma_y}{\sigma_{\hat{Y}}^2 + \sigma_y^2 + (\mu_{\hat{Y}} - \mu_Y)^2}$$

where $\mu_{\hat{Y}}$ and $\mu_Y$ are the mean of the prediction $\hat{Y}$ and the label *Y*, respectively, and $\sigma_{\hat{Y}}$ and $\sigma_y$ are the corresponding standard deviations. $\rho$ is the Pearson Correlation Coefficient (PCC) between $\hat{Y}$ and *Y*.

**Brief description of the figures**

Several exemplary embodiments will now be described with reference to the accompanying drawings, in which:

Fig. 1 is a simplified schematic representation of an exemplary embodiment of the system in accordance with the invention.
Fig.2 is a simplified schematic representation of another exemplary embodiment of the system in accordance with the invention.

**Detailed description**

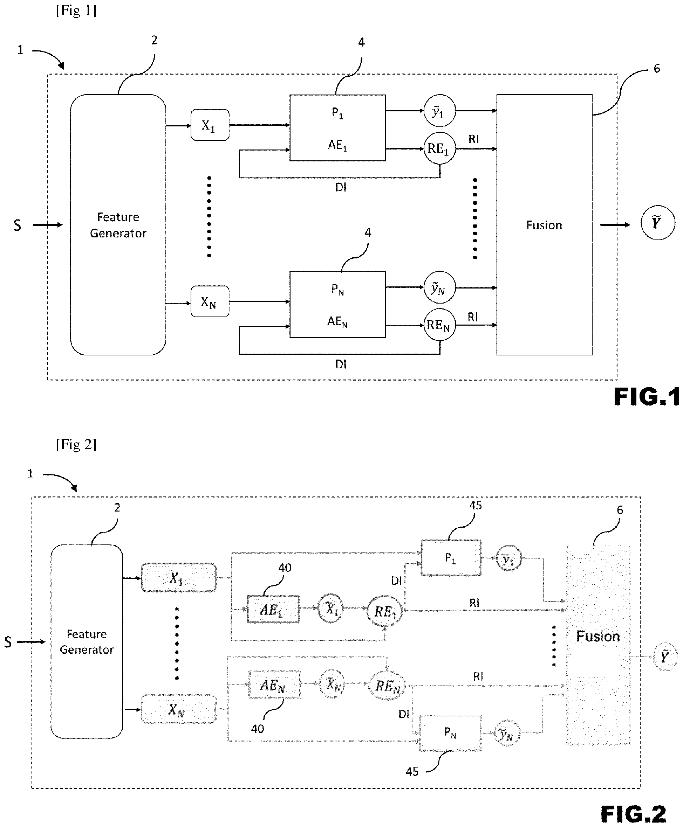

A multi-modal system 1 according to the invention is represented on Figure 1.
N features sets $\{X_1, ..., X_N\}$ have been extracted from input signals S, also referred as "raw signals" or "raw data" in the following. The feature sets $\{X_1, ..., X_N\}$ may be extracted through a feature generator 2, as represented in figure 1. In other embodiments, the feature sets may have been obtained beforehand, using analysis or extraction systems known in the art.
The signals S may comprise audio or/and video recordings, physiological signals, or any other type of signal that could be useful with regards to the prediction.
A feature set $X_i$ (for i between 1 and N) is a vector or a matrix comprising one or more features varying over time. A feature may be, for instance, the number of times a subject has blinked over a determined period of time, for example during a 10-second interval.
The feature set thus comprises values of the blink occurrence for multiple successive intervals. The temporal information of each feature is included in the feature set.
Each feature set $X_i$ is provided as an input to a unimodal processing unit 4.
For each feature set $X_i$, the unimodal processing unit 4 generates a unimodal prediction $\tilde{y}_i$ and a reconstruction error $RE_i$, the latter representing the learning difficulty of that feature set.
Both the unimodal prediction $\tilde{y}_i$ and the $RE_i$ are provided to a fusion module 6 which combines the unimodal predictions $\{\tilde{y}_1, ..., \tilde{y}_N\}$ together to generate a multi-modal prediction $\tilde{Y}$.
The fusion module 6 considers the reconstruction errors $\{RE_1, ... , RE_N\}$ as reliance indicators RI of the different feature sets $\{X_1, ..., X_N\}$ and uses that information to update the fusion process accordingly.
As illustrated on figure 1, for each feature set, the reconstruction error $RE_i$ may also be fed back, as a difficulty indicator DI, to the unimodal predictor 40 to improve the accuracy of the prediction $\tilde{y}_i$.
The unimodal prediction $\tilde{y}_i$ is generated by a predictor Pi.
The reconstruction error $RE_i$ is computed by an auto-encoder AEi, based on the difference between the original feature set $X_i$ and its reconstruction $\tilde{X}_i$:

$$RE_i = \sum_{X_i \in \mathbb{R}^d} \left\| X_i - \tilde{X}_i \right\|$$

The difficulty indicator DI may be defined as the average mean square of the $RE_i$.
The unimodal prediction $\tilde{y}_i$ and the reconstruction error $RE_i$ may be computed by the same neural network which, in that case, is trained both as the predictor $P_i$ and the auto-encoder AEi. In another embodiment illustrated on figure 2, the unimodal processing unit 4 comprises two separate neural networks 40 and 45, one for the predictor $P_i$, one for the auto-encoder AEi, respectively.

Example

The system according to the invention may be designed and trained for emotion recognition. An example of system for such an application will now be described.
The multi-sensing signals S is a database obtained from 69 German-speaking participants, aged between 18 and 39 years, in a stress inducing setup. Each participant is asked to present orally for approximately five minutes in front of two interviewers. Video and physiological recordings are taken during the presentation. The total duration of the database is 5h: 47min: 27s.
The given modalities, corresponding to the raw multi-sensing signals, are audio, video, transcripts in addition to the physiological signals Electrodermal Activity (EDA), Electrocardiogram (ECG), respiration and heart rate (BPM).
The following acoustic, visual and textual features are extracted from the raw signals using analysis systems known in the art:

- acoustic features

  ∘ eGeMAPS features: the audio signal is divided in overlapping 6 seconds windows, from which a set acoustic features, the "extended Geneva Minimalistic Acoustic Parameter Set" (eGeMAPS) is extracted using the free openSMILE toolkit. The set of features comprises low-level acoustic descriptors including frequency, energy, and spectral parameters. The eGeMAPS features are normalized.

  ∘ DeepSpectrum features: 4096 features are extracted from the audio signal using "DeepSectrum", an extraction system known in the art comprising a deep convolutional neural network (CNN) pre-trained with the spectrograms of audio signals.

- visual features

  ∘ VGGFace: VGGFace is the output result from a deep CNN used for face recognition. The VGGFace features correspond to the 512-output vector after detaching the last layer of the model.
  ∘ FAU: Using the Multi Cascaded Convolutional Neural Networks (MTCNN), 17 facial action unit (FAU) intensities are obtained from the center and left sides of the face.

- textual features
  ∘ BERT: Bidirectional Encoder Representations from Transformers (BERT) features are provided. The high-level contextual embedding proved to deliver state of the art results for several Natural Language Processing (NLP) tasks. Since the participants speak in German, BERT is pre-trained on German texts.

Hence, in this example, there are five feature sets, from now on denoted as eGeMAPS, DeepSpectrum, VGGFace, FAU and Bert, each feature set comprising many features and their variation over time.

For each feature set, two variables representative of the emotion, arousal and valence, are annotated by three raters.

The fusion of the annotations, hereafter also referred as "labels", is done using the RAAW method as described in Stappen, Lukas, et al. "The MuSe 2021 Multimodal Sentiment Analysis Challenge: Sentiment, Emotion, Physiological-Emotion, and Stress." (arXiv preprint arXiv:2104.07123, 2021).

In this example, for each feature set, the unimodal predictor and the auto-encoder are separate entities, as illustrated on figure 2.

Moreover, the unimodal predictors, AEs, and fusion module all comprise a neural network sharing the same architecture: a four-layered RNN with 64 hidden neurons followed by a feedforward layer.

For the training, the dataset comprising the above-mentioned features and their respective labels, is randomly partitioned into a training set (41 participants ~60%) and a validation set (14 participants ~20%) and a testing set (14 participants~20%)

In this example, the Adam optimizer is used and learning rates are varied (0.001, 0.005, 0.0005). As a form of regularization, dropout is applied and training is evaluated with several rates (0.1, 0.2, or 0.5).

Each neural network is trained for 100 epochs at most, and early stopping is applied if the validation does not improve after 15 epochs. For the loss function $\mathcal{L}$ , the Concordance Correlation Coefficient (CCC) loss is computed, as defined earlier. Other loss functions known in the art can be used, such as the mean square error (MSE) or the least absolute deviation (L1).

An ablation study is conducted to compare different types of recurrent neural networks for the example considered.

Four recurrent neural networks are examined at the unimodal prediction level: LSTM, GRU, biGRU, and biLSTM.

They are all, as mentioned earlier, 4-layered networks with 64 hidden neurons.

The performance of each model on the validation set, represented by the CCC value at the end of training, is summarized in Table 1 and Table 2 for the prediction of arousal and valence, respectively.

As can be seen, generally, the BiGRU and BiLSTM models outperform both LSTM and GRU models.

These results show that both past and future information is relevant for emotion prediction.

**[Table 1]**: Arousal

| Features | LSTM | BiLSTM | GRU | BiGRU |
|---|---|---|---|---|
| eGeMAPS | 0.4714 | **0.5466** | 0.4739 | 0.5322 |
| VGGface | 0.1809 | **0.3561** | 0.1283 | 0.2293 |
| FAU | 0.3260 | 0.3637 | 0.3641 | **0.3688** |
| Bert | 0.2250 | **0.3166** | 0.2349 | 0.2681 |
| DeepSpectrum | **0.3339** | 0.2617 | 0.2538 | 0.2185 |

**[Table 2]**: Valence

| Features | LSTM | BiLSTM | GRU | BiGRU |
|---|---|---|---|---|
| eGeMAPS | **0.5926** | 0.5597 | 0.5671 | 0.5646 |
| VGGface | 0.5650 | 0.5671 | 0.5414 | **0.6481** |
| FAU | 0.5480 | **0.5952** | 0.5531 | 0.5143 |
| Bert | 0.3025 | 0.2538 | 0.2828 | **0.4473** |
| DeepSpectrum | 0.5548 | **0.5678** | 0.5532 | 0.5630 |

Since BiGRU and BiLSTM show close performances and BiGRU have less parameters, the BiGRU model is selected for the rest of the study, for a better generalization on the testing set.

Next, the effect of using the reconstruction error as an additional input for the unimodal predictor is studied for the five feature sets.

The CCC performances achieved on the validation set where the BiGRU is fed with the unimodal feature only, compared to unimodal feature and reconstruction error, are summarized for arousal and valence prediction tasks in Table 3 and Table 4 below, respectively.

The results show improvement in using the reconstruction error for almost all the feature sets and for both tasks, which confirms that the difficulty information helps the unimodal predictor perform better.

**[Table 3]**: Arousal

| | Unimodal Features | Unimodal Features + RE |
|---|---|---|
| eGeMAPS | 0.5322 | **0.5829** |
| VGGFace | 0.2293 | **0.3926** |
| FAU | **0.3688** | 0.3668 |
| Bert | 0.2681 | **0.3457** |
| DeepSpectrum | 0.2185 | **0.2498** |

**[Table 4]**: Valence

| | Unimodal Features | Unimodal Features + RE |
|---|---|---|
| eGeMAPS | 0.5646 | **0.6353** |
| VGGFace | 0.6481 | **0.6798** |
| FAU | 0.5143 | **0.5307** |
| Bert | 0.4473 | **0.4655** |
| DeepSpectrum | 0.5630 | **0.5676** |

At the fusion level, several combinations of feature sets are tested, as shown in Table 5 below. As can be seen, fusing several modalities as opposed to one only significantly boosts the performance. For the visual features, using low-level (FAU) and high-level features (VGGface) results in better performance.

Adding the textual feature set (Bert) causes a drop in the performance; this can be explained by the fact that textual information in interviews may not reflect true emotions.

**[Table 5]**

| Combined feature sets | Arousal | Valence |
|---|---|---|
| eGeMAPS + VGGface | 0.6205 | 0.7024 |
| eGeMAPS + VGGface+ Bert | 0.6031 | 0.6811 |
| eGeMAPS + VGGface+ DeepSpectrum | 0.6199 | 0.7320 |
| eGeMAPS + VGGface+ FAU | **0.6469** | **0.7653** |

The best combination of feature sets (eGeMAPS + VGGface + FAU) is then fused with and without the corresponding REs to examine the effect of taking into account the additional "reliance indicators" for the fusion.

CCC performance results obtained with a BiGRU are summarized in Table 6 below. As can be seen, better results are achieved by adding the REs of features sets as extra inputs for the fusion module.

**[Table 6]**

| Inputs | Arousal | Valence |
|---|---|---|
| Fused Unimodal predictions | 0.6469 | 0.7653 |
| Fused Unimodal predictions + RE | **0.6554** | **0.8036** |

The invention is not limited to the examples that have just been described. The neural networks of the different entities (AE, unimodal predictor, fusion) may comprise additional layers, or a different architecture.

Other types of feature sets can be used and different combinations with the above-described feature sets may be tested.

**Claims**

1. A multi-modal prediction system (1) for the machine generation of a time-dependent prediction ($\tilde{Y}$) from multi-sensing temporal signals (S) from which a least two unimodal feature sets have been extracted, the system comprising:

   - for each feature set, a unimodal processing unit for processing the feature set through at least one recurrent neural network (RNN), the unimodal processing unit comprising:

     ◦ an auto-encoder computing a temporal reconstruction error of that feature set, and,
     ◦ at least one unimodal predictor generating a unimodal temporal prediction,

   - a fusion module for fusing the unimodal predictions of the feature sets and generating a temporal prediction, the fusion module comprising a RNN taking as inputs said unimodal predictions together with the reconstruction errors of the feature sets.

2. The system according to claim 1, wherein for each feature set ($X_i$), the at least one unimodal predictor (Pi) uses the reconstruction error (REi) computed by the auto-encoder (AEi) of that feature set as an input for the generation of the unimodal temporal prediction ($\tilde{y}_i$).

3. The system according to claim 1 or 2, wherein for each feature set ($X_i$), the auto-encoder and the at least one unimodal predictor each comprise at least one RNN (40, 45), the RNNs being preferentially designed with the same architecture.

4. The system according to any one of the preceding claims, wherein the at least one RNN of the unimodal processing units (4) or/and the RNN of the fusion module (6) is a bi-directional RNN, preferably a bi-LSTM or bi-GRU.

5. The system according to any one of the preceding claims, where the multi-modal time-dependent prediction ($\tilde{Y}$) is the prediction of an emotion.

6. The system according to any one of the preceding claims, wherein the at least one RNN of the unimodal processing units or/and the RNN of the fusion module is of LSTM or GRU type.

7. The system according to any one of the preceding claims, wherein the at least one RNN of the unimodal processing units or/and the RNN of the fusion module further comprises a feed-forward neural layer.

8. The system according to any one of the preceding claims, wherein the multi-sensing signals (S) comprise audio recordings, video recordings and /or temporal physiological signals, in particular electrodermal activity, electrocardiogram, respiration and/or heart rate.

9. The system according to any one of the preceding claims, wherein the unimodal feature sets $X_i$) comprise time-series of acoustic, visual and/or textual data.

10. The system according to any one of the preceding claims, wherein the multi-modal temporal prediction ($\tilde{Y}$) comprises at least two different variables.

11. A computer-implemented method to generate a multi-modal temporal prediction ($\tilde{Y}$) from multi-sensing signals (S), from which a least two unimodal feature sets have been or may be extracted, using the system using the system of claim 1, the method comprising:

    a) Optionally, generate from the multi-sensing signals said at least two feature sets ($X_i$), preferentially at least three feature sets,
    b) process each feature set ($X_i$) in a unimodal processing unit (4) through at least one RNN to generate a unimodal temporal prediction ($\tilde{y}_i$) and a reconstruction error (REi), the reconstruction error being computed by an auto-encoder (AEi) and the unimodal prediction ($\tilde{y}_i$) by a unimodal predictor (Pi),
    c) fuse the unimodal temporal predictions ($\tilde{y}_i$) to generate a multi-modal temporal prediction ($\tilde{Y}$), the fusion being performed by a fusion module comprising a recurrent neural network (RNN), the reconstruction error (REi) of each feature set ($X_i$) being given as an additional input to the fusion module for the fusion.

12. The method according to the preceding claim, wherein for each feature set ($X_i$), the reconstruction error (REi) of that feature set is given as additional input to the unimodal predictor (Pi) to be used for generating the unimodal temporal prediction ($\tilde{y}_i$).

13. The method according to any one of claims 11 and 12, wherein the method is used for the prediction of dimensional representations of an emotion, in particular valence and arousing.

14. The method according to any one of claims 11 to 13, wherein at step b), the reconstruction error (REi) and the unimodal prediction ($\tilde{y}_i$) are each computed through a separate RNN.

15. The method according to any one of claims 11 to 14, wherein, prior to step b), the RNNs of the unimodal processing units (4) and fusion module (6) are trained separately with a dataset comprising a learning dataset and a validation dataset, a concordance correlation coefficient (CCC) loss being computed for each trained RNN to represent the performance of that RNN on the validation dataset.

[Fig 1]

FIG.1

[Fig 2]

FIG.2

Europäisches
Patentamt

European
Patent Office

Office européen
des brevets

# EUROPEAN SEARCH REPORT

**Application Number**

EP 21 30 6407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ZHANG ZIXING ET AL: "Dynamic Difficulty Awareness Training for Continuous Emotion Prediction", IEEE TRANSACTIONS ON MULTIMEDIA, IEEE, USA, vol. 21, no. 5, 1 May 2019 (2019-05-01), pages 1289-1301, XP011721174, ISSN: 1520-9210, DOI: 10.1109/TMM.2018.2871949 [retrieved on 2019-04-23] * abstract; figure 1; table IV * * sections I.-IV. * | 1-15 | INV. G06N3/04 G06N3/08 G06V40/00 |
| X | LANG HE ET AL: "Multimodal Affective Dimension Prediction Using Deep Bidirectional Long Short-Term Memory Recurrent Neural Networks", AUDIO/VISUAL EMOTION CHALLENGE, ACM, 2 PENN PLAZA, SUITE 701 NEW YORK NY 10121-0701 USA, 26 October 2015 (2015-10-26), pages 73-80, XP058074715, DOI: 10.1145/2808196.2811641 ISBN: 978-1-4503-3743-4 * abstract; figure 3 * * sections 2.5, 3.2 * | 1-15 | |

-/--

**TECHNICAL FIELDS SEARCHED (IPC)**

G06N
G06K
G06V
G06F

The present search report has been drawn up for all claims

| Place of search | Date of completion of the search | Examiner |
|---|---|---|
| Munich | 12 May 2022 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 163 830 A1**

Europäisches Patentamt

European Patent Office

Office européen des brevets

**EUROPEAN SEARCH REPORT**

Application Number

EP 21 30 6407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | STAPPEN LUKAS ET AL: "The MuSe 2021 Multimodal Sentiment Analysis Challenge: Sentiment, Emotion, Physiological-Emotion, and Stress Association for Computing Machinery", , 14 April 2021 (2021-04-14), pages 1-9, XP055919636, Retrieved from the Internet: URL:https://arxiv.org/pdf/2104.07123v1.pdf > * abstract * * section 3 * ----- | 1-15 | |
| X | US 2019/341025 A1 (OMOTE MASANORI [US] ET AL) 7 November 2019 (2019-11-07) * abstract; figures 3A, 4, 5, 6 * * paragraph [0028] * * paragraph [0042] – paragraph [0043] * * paragraph [0074] * ----- | 1-15 | |
| X | US 2020/104670 A1 (SEO CHANWON [KR] ET AL) 2 April 2020 (2020-04-02) * abstract; figure 1 * ----- | 1-15 | TECHNICAL FIELDS SEARCHED (IPC) |
| A | HAN JING ET AL: "Reconstruction-error-based learning for continuous emotion recognition in speech", 2017 IEEE INTERNATIONAL CONFERENCE ON ACOUSTICS, SPEECH AND SIGNAL PROCESSING (ICASSP), IEEE, 5 March 2017 (2017-03-05), pages 2367-2371, XP033258840, DOI: 10.1109/ICASSP.2017.7952580 [retrieved on 2017-06-16] * abstract; figure 1 * * sections 1-4 * ----- | 1-15 | |

The present search report has been drawn up for all claims

| Place of search | Date of completion of the search | Examiner |
|---|---|---|
| Munich | 12 May 2022 | Kopilovic, Ivan |

EPO FORM 1503 03.82 (P04C01)

## ANNEX TO THE EUROPEAN SEARCH REPORT
## ON EUROPEAN PATENT APPLICATION NO.

EP 21 30 6407

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2022

| Patent document cited in search report | | Publication date | Patent family member(s) | | Publication date |
|---|---|---|---|---|---|
| US 2019341025 | A1 | 07-11-2019 | US 2019341025 | A1 | 07-11-2019 |
| | | | WO 2019204186 | A1 | 24-10-2019 |
| US 2020104670 | A1 | 02-04-2020 | US 2020104670 | A1 | 02-04-2020 |
| | | | WO 2020067633 | A1 | 02-04-2020 |

EPO FORM P0459

For more details about this annex : see Official Journal of the European Patent Office, No. 12/82

**EP 4 163 830 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHANG et al.** Dynamic Difficulty Awareness Training for Continuous Emotion Prediction. *IEEE Trans. Multimed.,* May 2019

- **STAPPEN, LUKAS et al.** The MuSe 2021 Multimodal Sentiment Analysis Challenge: Sentiment, Emotion, Physiological-Emotion, and Stress. *arXiv:2104.07123,* 2021